# EUROPEAN PATENT APPLICATION

(11) **EP 4 703 914 A1**
(43) Date of publication of application: **04.03.2026**
(21) Application number: 24197050.8
(22) Date of filing: 28.08.2024
(51) Int. Cl.: G06F 16/907

(54) **METHOD FOR DEVELOPING INSTITUTIONAL KNOWLEDGE TO SUPPORT INSTITUTIONAL MEMORY, DECISION-MAKING, AND PREDICTIVE CAPABILITIES THROUGH ADVANCED DATA INTEGRATION AND AI**

(71) Applicant: Enterteq Software S.r.l., Bucharest (RO)
(72) Inventor: Cretu, Gheorghe, Voluntari (RO); Apahideanu, Cristina, Bucharest (RO)
(74) Representative: Cosmovici, Paul

(57) **Abstract**

The invention refers to a method for integrating quantitative and qualitative predictive models using Al and machine learning to enhance institutional knowledge management. By combining static, dynamic, and fuzzy data with tacit knowledge, the method creates a comprehensive institutional knowledge repository that supports decision-making and prediction.

The approach involves capturing diverse data, transforming it into a small data framework for contextual understanding, and incorporating tacit knowledge through human input. An inference database is then developed to integrate qualitative and quantitative models, refined through continuous feedback loops.

Leveraging modern AI and ML technologies, the invention creates a hybrid model that enhances decision-making by blending expert knowledge and scenario analysis with statistical and machine learning techniques. The framework also defines requirements for accessing institutional memory and ensures continuous improvement through automated feedback mechanisms.

## Description

### TECHNICAL FIELD OF INVENTION

The invention provides a novel method for integrating quantitative and qualitative predictive models using artificial intelligence (Al) and machine learning (ML). This method addresses the challenges of managing institutional knowledge by incorporating fuzzy data, big data, small data, and tacit knowledge to create a comprehensive institutional knowledge repository. The repository is designed to interpret context, support decision-making, and enhance predictions by leveraging a continuous feedback loop and integrating both human expertise and advanced algorithms.

The method offers reliable mechanism for accessing institutional memory, rational support for decision-making and prediction scenarios.

The invention involves a method for designing and implementing several key modules, such as:
a) capturing data from static, dynamic, and fuzzy sources;
b) transforming this data into a small data framework to create contextual knowledge;
c) incorporating tacit knowledge and
d) establishing an inference database.

Thus, the technical field of invention pertains to data science, machine learning, and artificial intelligence, focusing on creating a reliable institutional memory model and a holistic qualitative and quantitative decision and prediction model.

### DISCUSSION ON RELATED ART

Institutional knowledge refers to the collective understanding, experiences, processes, information, and practices that are accumulated within an organization over time. This knowledge is embedded in the organization's culture, workflows, and people, and it plays a critical role in the organization's efficiency, decision-making, and overall success.

Similarly, organizational memory refers to the stored knowledge, experiences, processes, and practices that an organization accumulates over time. This memory influences how an organization operates, makes decisions, and adapts to new challenges. It encompasses both the tangible and intangible elements that shape the organization's culture, strategy, and effectiveness.

The current state of data-driven decision-making and predictions requires a thorough exploration and capture of data from diverse sources. Traditionally, data sources can be categorized into three main types:
- Static Data: this includes data produced by companies or organizations, primarily related to financial aspects, and occasionally related to management information
- Dynamic Data: This pertains to data derived from Big Data and statistical analyses, which evolve over time and can be used to inform real-time decisions
- Fuzzy Data: These are ambiguous, imprecise, and vague data often sourced from external environments such as media or early-stage data creation flows.

The challenge with these data types is that they are not always interpretable by humans and, therefore, do not consistently serve as reliable sources for decision-making and predictions. Effective knowledge creation relies on designing a context that makes these data actionable.

This context involves several key components:
- Small Data: Data that can be interpreted and analyzed by human experts, providing actionable insights in a more understandable format
- Tacit Knowledge: Personal, experiential knowledge that cannot be fully articulated or shared externally, emphasizing the importance of expert and practitioner insights
- Inference Database: An advanced concept of database that integrates and interprets various inputs, facilitating improved machine learning performance.

The proposed method in this patent introduces a novel approach to converting data into institutional knowledge by seamlessly integrating software mechanisms with human experience, intuition, and emotion.

This approach aims to bridge the gap between qualitative forecasting, which leverages expert insights and subjective knowledge, and quantitative forecasting, which relies on historical data to create small data contexts for decision-making and predictions. The integration of a technical framework with a theory of knowledge enhances the capability to develop a robust institutional memory, support informed decision-making, and improve predictive accuracy.

### Fuzzy Data:

Fuzzy data refers to information that is imprecise, vague, or ambiguous, lacking clear boundaries or exact values. This kind of data often arises in situations where concepts and classifications are not sharply defined and can be subjective or open to interpretation. Fuzzy data is a key concept in the field of fuzzy logic and fuzzy set theory, where traditional binary logic (true/false, yes/no) is extended to handle the continuum of truth values between entirely true and entirely false.

The classical processing method of those data sets is fuzzy logic. That method allows different degrees of truth than the traditional binary true/false. Fuzzy data and fuzzy logic are valuable for dealing with uncertainty and imprecision in real-world scenarios. They allow for more flexible and adaptive systems that can better mimic human reasoning. Fuzzy data encapsulates the idea that not all information can be crisply defined, and it is often necessary to work with varying degrees of truth and imprecision to effectively model and process real-world phenomena.

Fuzzy data processing involves theories and methodologies that handle imprecision, vagueness, and uncertainty in data. These theories extend traditional logic and set theory to allow for partial truth values between entirely true and entirely false.

Below are some key theories and concepts in fuzzy data processing.
- Developed by Lotfi Zadeh in 1965 (Fuzzy Sets), fuzzy set theory extends classical set theory by allowing elements to have degrees of membership in a set. These functions define the degree to which an element belongs to a fuzzy set. The membership value ranges from 0 (completely not in the set) to 1 (completely in the set).
- Fuzzy logic extends Boolean logic to handle the concept of partial truth. Inference Systems is the systems that use fuzzy logic to draw conclusions from fuzzy rules. Two common types are Mamdani and Sugeno inference systems.

### Big Data:

Among all the components considered for this patent, big data is well-known and widely implemented in practice. Big data refers to extremely large and diverse collections of structured, unstructured, and semi-structured data that grow exponentially over time. These datasets are characterized by their volume, velocity, and variety, exceeding the processing capabilities of traditional data management systems. In documenting this patent, we have considered research conducted across various fields, where big data analysis involves examining vast datasets to uncover hidden patterns, correlations, and insights, leading to significant advancements in numerous domains.
- Healthcare: "Predicting the future with Google's Flu Trends" by Ginsberg et al. (2009) demonstrated using search data to estimate flu trends faster than traditional methods.
- Environmental Science: "Global Climate Models and Big Data Analytics" by NASA. NASA uses big data analytics to improve climate models. By analyzing vast amounts of climate data, researchers can better predict future climate scenarios and assess the impact of various factors on global warming.
- Finance: "High-Frequency Trading and Big Data" by Aldridge and Krawciw (2017). High-frequency trading firms use big data to analyze market trends and execute trades at incredibly high speeds. This research focuses on the impact of big data analytics on trading strategies and market behavior.

Big data research has transformed numerous fields by enabling the analysis of vast amounts of data to uncover insights that were previously unattainable. From healthcare and finance to environmental science and urban planning, the applications of big data are vast and varied. The key to successful big data research lies in the ability to efficiently process and analyze large datasets using advanced techniques like machine learning, data mining, and predictive analytics.

### Small Data:

The concept of "small data" is relatively new, emerging as a potential research field in 2010. It pertains to the concept of performant transfer learning, where small datasets are used for specific tasks while leveraging abundant data from related problems. The work related to this patent focuses on transfer learning, which utilizes pre-trained small data from big data repositories, static internal data, and fuzzy data. Small data involves extracting relevant information from big data modules to define specific phenomena. Since 2010, research in transfer learning has shown significant growth, particularly in areas like data labeling, artificial data generation, Bayesian methods, and reinforcement learning. Notably, transfer learning has demonstrated consistent and rapid growth, surpassing even reinforcement learning in recent years. The techniques used for small data processing in this patent include:
- Data Augmentation: Enhancing dataset size and diversity through various augmentation techniques.
- Transfer Learning: Leveraging pre-trained models on large datasets to improve performance on small datasets, which is the primary method used in this patent.
- Cross-Validation: Ensuring robust model evaluation with limited data.
- Ensemble Learning: Combining multiple models to improve predictive accuracy.
- Few-Shot Learning: Training models to make accurate predictions with minimal examples.
- Advanced Statistical Methods: Applying sophisticated statistical techniques to analyze and interpret small datasets.

Here are some studies on different fields that contribute to understanding small data today:
- Healthcare: "Deep learning-based classification of focal liver lesions with contrast-enhanced ultrasound" by J. Liu et al. (2020). This study utilized transfer learning to classify focal liver lesions using a small dataset of ultrasound images. Pre-trained models on larger datasets were fine-tuned to achieve high diagnostic accuracy. Techniques used: Data augmentation, transfer learning, and fine-tuning.
- Environmental Science: "Small Data, Big Data, and Climate Change" by L. Hannah et al. (2020). This research focused on predicting species distribution shifts due to climate change using limited occurrence data. By combining small datasets with climate models, researchers provided valuable insights into biodiversity conservation. Techniques used: Data integration, ensemble modelling, and spatial analysis.
- Finance: "A novel ensemble model for small data in credit scoring" by M. Lessmann et al. (2015). This study proposed an ensemble model combining multiple classifiers to predict credit risk using small datasets. The approach demonstrated improved accuracy over traditional methods. Techniques used: Ensemble learning, cross-validation, and feature selection.
- Agriculture: "Small data, big predictions: Leveraging transfer learning for crop yield prediction" by A. Jain et al. (2021). Researchers used transfer learning to predict crop yields from a small dataset of agricultural images. By fine-tuning pre-trained models, they achieved significant improvements in predictive accuracy. Techniques used: Transfer learning, data augmentation, and remote sensing.
- Natural Language Processing: "Few-shot learning for text classification with small data" by Y. Zhang et al. (2019). The study explored few-shot learning techniques to classify text sentiments with minimal labelled data. Pre-trained language models like BERT were fine-tuned on small datasets to achieve competitive performance. Techniques used: Few-shot learning, transfer learning, and fine-tuning.

### Tacit Knowledge:

Involves informal, experiential knowledge often referred to as a non-explicit know-how. It includes experiential technical skills developed over time that are difficult to articulate scientifically or technically. Tacit knowledge is personal and often lost with the individual's departure that intrinsically affects the development of a process and organization.
- Polanyi's Theory of Tacit Knowledge (1966) - Polanyi introduced the concept of tacit knowledge in his work, "The Tacit Dimension" (1966). He argued that "we can know more than we can tell," emphasizing the importance of personal knowledge that cannot be fully articulated or shared externally.
- Nonaka and Takeuchi's Knowledge Conversion Model (1995) - Ikujiro Nonaka and Hirotaka Takeuchi expanded on Polanyi's ideas in their book "The Knowledge-Creating Company" (1995). They proposed the SECI model, which describes the dynamic process of knowledge conversion through four modes: socialization, externalization, combination, internalization.
- Organizational Learning by Barbara Levitt and James G. March highlighted the role of tacit knowledge in organizational learning. They argued that organizations learn by encoding inferences from history into routines that guide behavior.
- Research by Gary Klein and the Dreyfus Model of Skill Acquisition

Other related studies:
- Research by Gary Klein on naturalistic decision-making has shown that experts rely heavily on tacit knowledge. For instance, firefighters and chess grandmasters use intuitive judgment developed through years of experience.
- Dreyfus and Dreyfus' Model of Skill Acquisition describes the progression from novice to expert, emphasizing the increasing reliance on tacit knowledge as one gain expertise.

The innovative aspect of this patent lies in the integrative structure of these three components, creating a predictive decision-making framework that combines qualitative and quantitative prediction models.

### Inference Database:

The inference database is considered as being the most evolved concept of database able to put together different inputs and connect and interpret them for machine learning performance.
- Eric Jonas et al. Efficient Data Management for Machine Learning. This paper discusses the unique data management challenges posed by machine learning applications. It highlights the need for specialized databases that support the entire machine learning lifecycle, from data preprocessing to model inference.
- Jim Dowling, Robin Andeer. Feature Stores for Machine Learning. The study introduces the concept of feature stores, which are specialized databases for storing and managing machine learning features. It discusses the design and implementation of feature stores and their role in simplifying and scaling machine learning workflows.

### Roger Martin's Theory of Knowledge:

*The Knowledge Funnel* is a concept developed by Roger L. Martin in his book "The Design of Business: Why Design Thinking is the Next Competitive Advantage" (2009). Martin, a renowned business strategist, explores how organizations can innovate by integrating design thinking into their business strategies. The Knowledge Funnel is central to his argument, describing the process by which knowledge in organizations evolves and becomes increasingly refined.

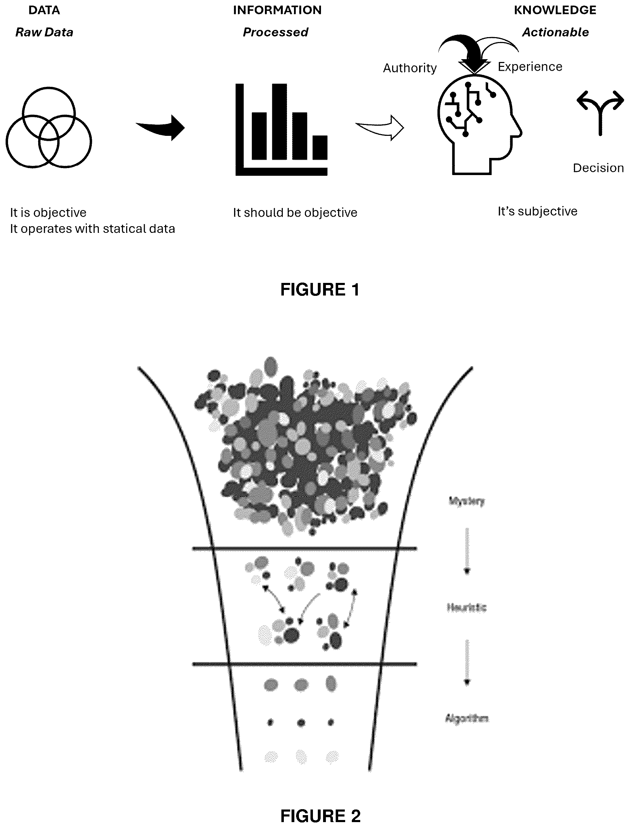

The Knowledge Funnel represents the essence of Martin's theory of knowledge. It is presented as the progression of knowledge within an organization through three stages, illustrated in **FIGURE 2****.**
1. **Mystery.** This is the first stage, where a problem or opportunity is poorly understood. At this stage, knowledge is ambiguous, and solutions are unknown. The focus is on exploring the problem space, identifying patterns, and understanding the underlying challenges.
2. **Heuristic.** In this stage, the mystery has been partially solved, and general rules of thumb (heuristics) have been developed to guide decision-making. These heuristics are not foolproof but are based on experience and observation. They help simplify the problem and make it more manageable.
3. **Algorithm.** The final stage is where the heuristic is refined into an algorithm as an explicit, repeatable procedure that can be executed systematically. At this point, the knowledge is well understood and can be automated, leading to efficiency and scalability.

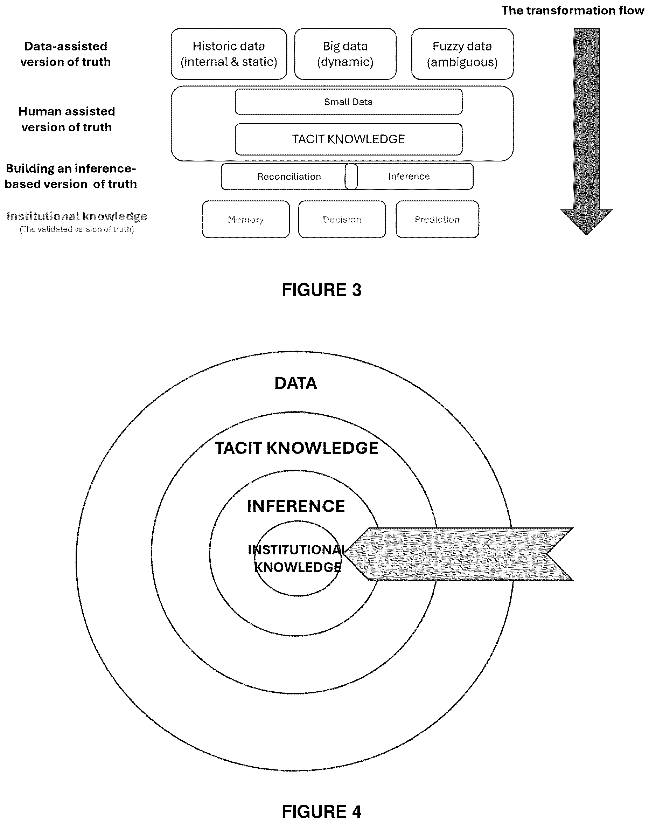

The real-life challenge is represented by the speed of moving from a stage to another. Martin suggests that it can be done only in the conditions when a "leapfrog" is possible. This patent creates a software mechanism for it. Martin opens the discussions related the architecture related to knowledge, as depicted in **FIGURE 4****.**

### OBJECT OF THE INVENTION

The object of the invention is an innovative method for transforming data (static, dynamic and fuzzy) into institutional knowledge that allows to enhance the accuracy of three benefits pillars: institutional memory, decision-making, and prediction.

In a world with a high inflation of information, knowledge is becoming critical. From a company/organization point of view knowledge means *institutional memory* (past), *decision making support* (present) and *prediction* (future). The method uses existing research and practice related to some components such as big data, fuzzy data, tacit knowledge and inference database introducing original practice related to small data, context creation and tacit knowledge integration.

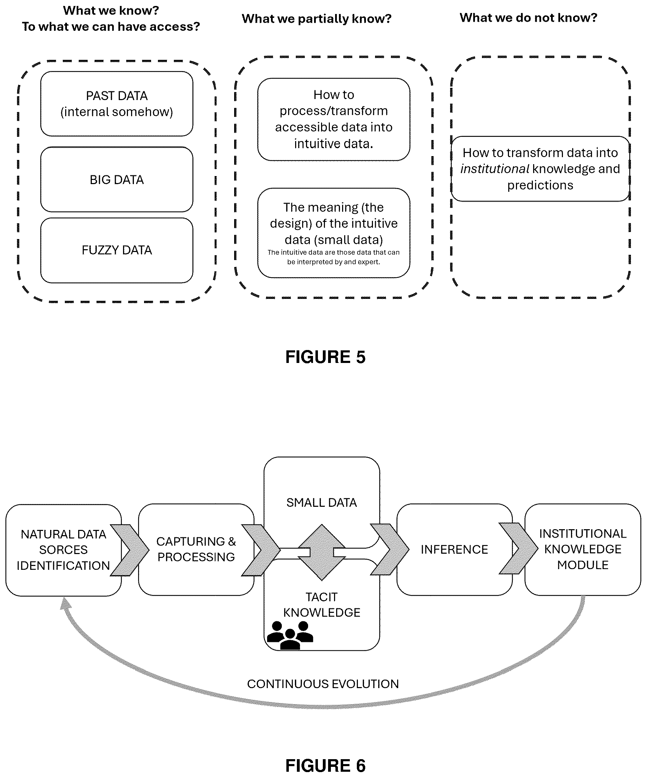

The integration of all these concepts requires an AI framework and machine learning. Tacit knowledge represents the trainer/human inputs for the machines. The method creates the "leapfrog" mechanism for shortened the distance in time from data to institutional knowledge, as illustrated in **FIGURE 5****.**

### SUMMARY OF THE INVENTION

The invention presents a method for developing institutional knowledge to support institutional memory, decision-making, and predictive capabilities. This method involves the integration of quantitative and qualitative models through a unique algorithmic process that connects three types of raw data: static, dynamic, and fuzzy data. It utilizes an intuitive data repository (small data) to provide the context for incorporating tacit knowledge and is grounded in a knowledge theory inspired by Roger Martin's Knowledge Funnel. By leveraging modern software technologies such as machine learning (ML) and artificial intelligence (Al) at the intersection of data and knowledge sciences, the method also introduces an advanced model for an inference database. This database seamlessly supports both qualitative and quantitative models, thereby improving the overall decision-making process, institutional memory, and predictive accuracy, as in **FIGURE 6****.**

### BRIEF DESCRIPTION OF THE FIGURES

Aspects of the invention will now be described, by way of example, with reference to the following figures, in which:
**FIGURE** 1 represents the classical approach developed by IBM in 2010. Obviously, more and more the necessity of knowledge would be the final task of any digital venture. IBM treated the approach from a simple technical view (with existing data) and knowledge is viewed as a tool for decision making. The nowadays requests are different from the data point of view where the data sources should be more diverse and, in many situations, from dynamic and ambiguous spaces. It is a new request for the quality of truth. Moreover, the unique benefit of knowledge is suggested to decision-making. Today the requests are more sophisticated and include institutional memory and designing prediction models.
**FIGURE 2** is a representation of the theory of knowledge viewed by Roger Martin, that was considered in this patent. It is obvious that the performance is direct related to the speed of transforming "mystery" to "algorithm." The knowledge model is more and more dependent by new approaches and technical architectures based on AI and machine learning as well as inference and tacit knowledge capturing.
**FIGURE 3** is a representation of the object of the invention that introduces all the components that create the method. The method aims to create institutional knowledge based on a validated version of truth. It starts with data assisted, human assisted, interactive versions of truth. The final scope is to get a validated version of truth that might create the institutional knowledge framework able to design the three pillars of the invention: institutional memory, decision making support and predictive models.
**FIGURE 4** is a graphical representation of the concept emphasizing the steps that should be performed from data to institutional knowledge. On the first circle, there are data with the entire portfolio: static, dynamic and fuzzy on the first task and small data that is related to process raw data into an intuitive (human understandable) model. Data should be continuously analyzed and updated by specific software mechanisms. On the second circle there are qualitative data resides from capturing tacit knowledge that might be internal and external. On the third circle there is the processing model by inference that creates the infrastructure for the institutional knowledge target.
**FIGURE 5** represents an answer to the necessity of the method. We know some things, but we do not know things that are essential for nowadays performance model. The existing framework creates imperfect knowledge and large *transaction costs* for getting an acceptable institutional knowledge space. So, the existing model can understand data (maybe it is an incomplete understanding of fuzzy data) at the first stage. Then the conventional framework partially knows how to process it, and we do certainly not how to transform the framework into knowledge. It is a gap between the technical understanding and business strategy related to the process of the process.
**FIGURE 6** represents the flow of the implementation of the method proposed by the patent. Starting with raw data capturing and moving according to the flow to institutional knowledge, the quality of the captured knowledge is directly related to the continuous improvement aspect.

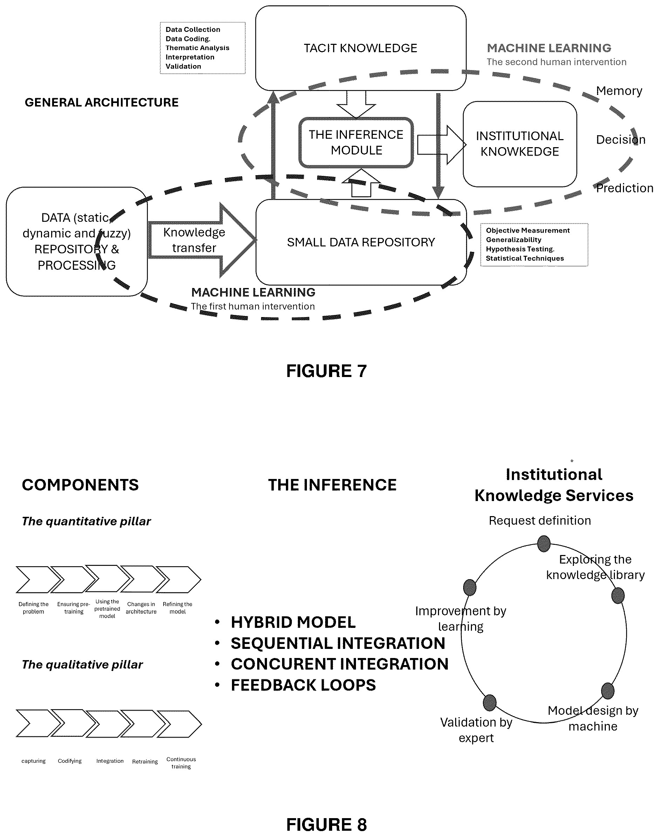

**FIGURE 7** shows the design of technical architecture of the method and the software components. The system has some repositories and processing components as well as two machines learning modules.
   - The first task is to create an intuitive set of data generically named small data
   - On this repository the system, we have developed a second machine learning for integration the tacit logic repository for creating an inference database.
   - Inference database is the main infrastructure for developing the institutional knowledge that are deposited in a special library.
   - A system able to parse these libraries create scenarios by demand for all the benefits: memory, decision and prediction.
**FIGURE 8** shows the details of the value chain and the institutional knowledge module usage. Starting from data, the method is a real knowledge creator for any organization. As a matter of fact, the knowledge library can be used from a problem definition to validation and continuous improvement mechanism.

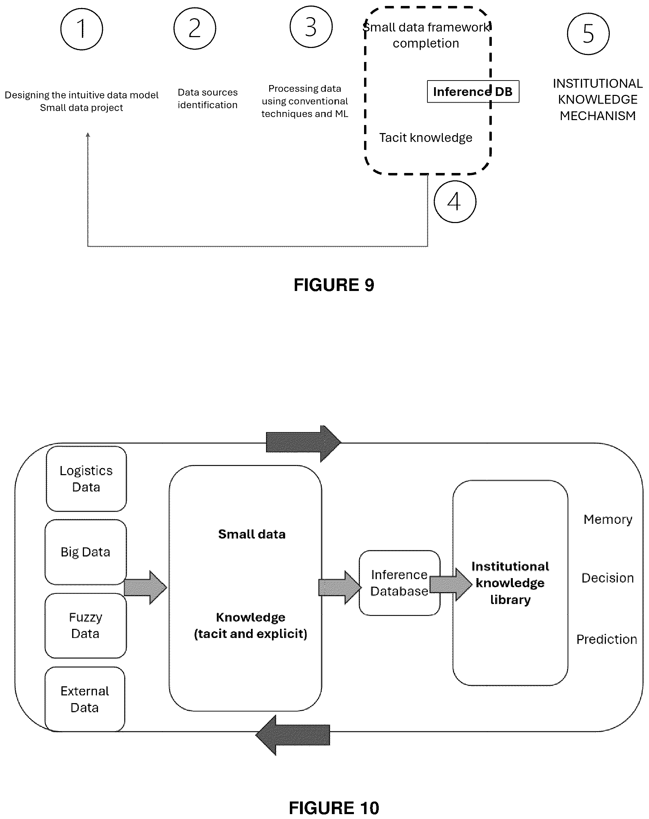

**FIGURE 9** shows an implementation model for organizations. It starts with creating a significant small data framework and after that identification of the data sources for a (almost) complete version of truth, collecting the significant data and populating the small data modules. On this it is an integration of the tacit knowledge qualitative data and designing an inference database for institutional knowledge library.
**FIGURE 10** shows the implementation model of the method for sustainability reporting. The usage of the data framework and the 2-level machine learning create the institutional knowledge for this field which is fundamental for the environmental, social and governance integration of the organizations. Due to the complexity and novelty the knowledge library for this field might be a *sine qua non* condition today for performance.

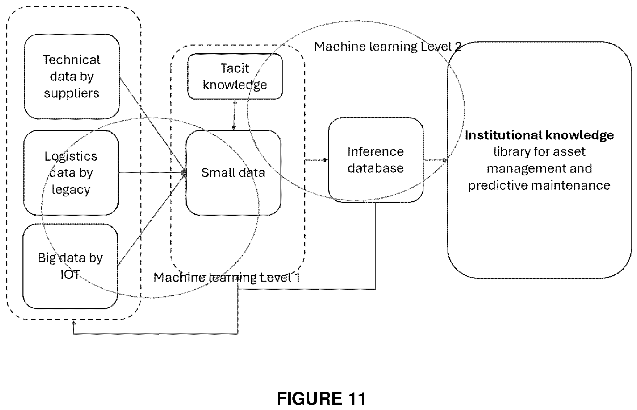

**FIGURE 11** represents the method implementation for the predictive maintenance case. The conventional predictive maintenance solutions consider only the statistical part of the concept. The method proposes an extended data framework and a smart integration of small data and tacit knowledge as the machine learning trainer.

### DETAILED DESCRIPTION OF THE INVENTION

The invention consists of a method for integrating quantitative and qualitative predictive models using AI and ML, in relation to Fuzzy Data, Big Data, Small Data, and Tacit Knowledge. The objective is to create an institutional knowledge repository capable of interpreting context and making accurate decisions regarding allocations and actions in the areas of institutional memory, decision-making, and prediction. A general architecture of the invention is illustrated in **Figure 7****,** which includes the modules used by the software solution to create the prediction model: big data, small data, tacit knowledge repository, inference module, prediction module, and the two-level machine learning modules.

The inference module, as depicted in **FIGURE 8** is the interaction between the qualitative and quantitative prediction models, and it is part of the prediction module. The scope of the patent is a method definition able to design and create a continuously improved digital library for institutional knowledge. The indirect outcomes of scope are reliable mechanisms for a sustainable institutional memory, decision-making and predictions.

This method employs a distinctive algorithmic interaction for processing data for a complete version of truth with knowledge science. Innovation lies at the intersection of data and knowledge sciences, leveraging modern software technologies related to machine learning (ML) and artificial intelligence (Al).

The method, as depicted in **FIGURE 3** **and** **FIGURE 10****,** aims to integrate data (static, dynamic and fuzzy), and tacit knowledge to create institution knowledge models for institutional memory, decision-making and predictions. Small data architectures and transfer knowledge offer advantages over data-intensive methods, enabling AI applications with minimal data. This is particularly useful in areas where the data is filtered by experts' tacit knowledge. They need intuitive data that is basically small.

When creating institutional knowledge, there are certain challenges worth mentioning:
- **Data Acquisition.** Gathering training data can be challenging, especially when it requires cooperation from individuals who do not directly benefit from providing it;
- **Periodic Updates.** The need for updating training data depends on the stability of the context in which the data was captured, analyzed, and decisions were made;
- **Feedback Loops.** Continuously improving algorithms based on feedback data can be difficult, particularly in dynamic contexts where feedback is hard to categorize
- **Bias Introduction.** It is easy to introduce biases into ML models, especially when multiple factors are involved. Initial research indicated that ML algorithms alone could not provide accurate maintenance matrices, even with continuous updates

The proposed method incorporates human expert validation alongside AI analytics to ensure accuracy. By transferring knowledge from one dataset to another, transfer learning enhances generalization, allowing models to provide increasingly accurate outputs beyond their training data. This technique aims to imbue AI systems with general-purpose knowledge akin to human understanding, facilitating broader application and improved accuracy in diverse tasks.

**Algorithmic & flow-based Interaction:** Explanation of how the algorithm integrates fuzzy data, static data, big data, small data, and tacit knowledge as in **FIGURE 6****.** As a matter of fact, it is an integration of qualitative and quantitative knowledge creation models that aims to enhance accuracy by combining the strengths of both approaches. Qualitative models often rely on expert judgment, intuition, and non-numerical data, while quantitative models use statistical, mathematical, and computational techniques to analyze numerical data. By integrating these models, organizations can leverage comprehensive insights, improve decision-making, and achieve more robust predictions. The key concepts are described below:

### Qualitative Prediction Models

∘ Expert Judgment. Relies on the expertise and intuition of individuals or groups to make predictions based on their knowledge and experience.
∘ Scenario Analysis. Involves developing different scenarios based on potential future events and assessing their impacts.
∘ Delphi Method. Uses a structured communication technique to gather opinions from a panel of experts through multiple rounds of questionnaires, converging towards a consensus.

### Quantitative Prediction Models

∘ Statistical Models. Utilizing historical data to identify patterns and relationships, often employing regression analysis, time series analysis, and hypothesis testing.
∘ Machine Learning Models. Employing algorithms to learn from data and make predictions, including techniques such as neural networks, decision trees, and support vector machines.
∘ Simulation Models. Using computational methods to simulate complex systems and predict their behavior under different conditions.

The designed connection covered by this patent application aims to create a multidimensional integration (the inference module) by applying this specific order of the following stages:
1*. Hybrid Model.* Combining qualitative and quantitative methods to capitalize on the strengths of both.
2. *Sequential Integration.* Applying qualitative methods to gather insights and hypotheses, followed by quantitative analysis to validate and refine predictions.
3. *Concurrent Integration.* Using qualitative and quantitative methods simultaneously, integrating their outputs to form a cohesive prediction.
4. *Feedback Loops.* Establishing feedback loops where quantitative models inform qualitative assessments and vice versa, allowing continuous refinement.

### Transfer Learning Process:

**a) First Level.** Transformation from big data to small data is achieved through the first human input (feedback loop). Building algorithms for knowledge transfer in the context of small data involves several key strategies and methodologies. Here's a step-by-step flow on how to effectively develop algorithms customized by industry:
   1. **Defining the problem** and understanding the domain-specific requirements.
   2. Ensuring that **pre-trained models** use big data module, that is relevant to your domain.
   3. **Data augmenting** based on using synonym replacement, random insertion, and back-translation to generate new text samples.
   4. Using the **pre-trained** model to extract features from the small dataset and then train a simple classifier or regressor on these features.
   5. **Modification of the architecture** of the pre-trained model by adding or removing layers as needed to better suit the small dataset.
   6. **Refining the model** based on validation results and error analysis.
**b) Second Level.** Capturing and interpreting tacit knowledge the second human input. The second level input is provided by the tacit knowledge contribution to the model. Using tacit knowledge (knowledge that is personal, context-specific, and often difficult to formalize) for building predictive models involves capturing the implicit expertise and insights of individuals to enhance data-driven decision-making. It is about building a knowledge space. Here's how to effectively integrate tacit knowledge into predictive models:
   1. **Capture tacit knowledge** using interviews, workshops, focus groups and observations, or through direct human interaction with the software platform (direct input)
   **2. Codify and digitalize tacit knowledge**
   3. **Incorporate tacit knowledge into predictive models** using machine learning
   **4. Retrain using NLP model**
   **5. Continuous learning and improvement**

**Institutional knowledge model.** The materialization of institutional knowledge is a library able to create scenarios and provide knowledge by demand when the request is defined. Now, institutional knowledge is approached in anon-technical way mainly based on documentation and training. The only method presented in the market was issued by IBM, as shown in **FIGURE 1****,** and refers to a limited version of truth that is related to internal data, a technical transfer to create information and an incomplete definition of knowledge.

The Method proposes the implementation steps are:
1. Designing the data intuitive model (small data) that can be understood by human practitioners and experts
2. Identification of the data spaces for a complete version of truth (related to the subject)
3. Processing data using machine learning, statistics, etc.
4. Creating small data and tacit knowledge integration context.
5. Designing and implanting of inference database
6. Creating the Institutional Knowledge Library and the AI mechanisms for proposing scenarios for accessing institutional memory, decision making rational support and predictions scenarios.

Within the present patent application, the capturing data from diverse raw data spaces and resources transformed in small (intuitive) data create together the model for a transfer learning method that carries the human tacit knowledge to the machine, as tacit knowledge represents the ground of the most appropriate decision in the related historical context and creates the circumstances to build the institutional knowledge framework that can be applied accurately and successfully in the future.

Hereby there are two examples of projects from different industries, where this method was researched and respectively applied by our experts:

### Predictive Maintenance of Assets (applied for Claim2me platform).

Predictive maintenance, as depicted in **FIGURE 11** uses performance monitoring and equipment condition monitoring to predict possible failures, thereby decreasing the chances of failure and downtime through pre-emptive interventions. The market for predictive maintenance technologies is anticipated to register a CAGR of 27.6% over the period 2022 - 2027. The main promise of predictive maintenance is to allow convenient scheduling of corrective maintenance and to prevent unexpected equipment failures. Predictive maintenance differs from preventive maintenance because it relies on the actual condition of equipment, rather than average or expected life statistics, to predict when maintenance will be required. Specific context parameters of the equipment such as position, temperature, humidity, altitude, pressure, ground slope etc. may cause the need for corrective interventions in different timeframes than recommended by the producer. Typically, machine learning approaches are adopted for the definition of the actual condition of the system and for forecasting its future states.

During the initial research effort, our experts understood that the machine learning algorithm is not capable to provide an accurate maintenance matrix, even though the continuous algorithm update is sustained. Therefore, within our model we have introduced the human expert validation of the scenarios proposed by the designed algorithms and by the predictive analytics to ensure capturing and transfer of tacit knowledge. Somehow, we had to give our A.I. systems general purpose knowledge on the human world, in the same way that humans perceive it. *Transfer learning* is an up- and-coming technique that allows us to transfer the knowledge learned from one dataset and apply it to another dataset.

Transfer learning has largely taken a backseat in the machine learning community up until recently with the rise of deep neural networks. Deep neural networks are extremely flexible compared to most other machine learning techniques. They can be trained, chopped up, modified, retrained, and generally just abused in all sorts of ways. This has led to all sorts of novel situations where we can apply transfer learning (httos://towardsdatascience.com/whv-small-data-is-the-future-of-ai-cb7d705b7f0a)
- In text processing, we can use a shallow neural net to try and encode the *meaning* of a word in a vector by reading tens of billions of lines of text from the internet. These vectors can then be applied to more specific tasks
- In image classification, we can train a neural network on the very large Image-Net dataset, and then retrain it on a smaller dataset for which we may only have a few thousand images.
- In predictive maintenance we can interpret using neural networks based on the data captured over time, and then retrain it on a smaller data-data set previously created labelled.

Here, the human in the loop approach is becoming a necessity in the digital prediction models.

In an article published in HBR ecosystem, H. James Wilson and Paul R Daugherty note *as small-data techniques advance, their increased efficiency, accuracy, and transparency will increasingly be put to work across industries and business functions. Think drug discovery, industrial image retrieval, the design of new consumer products, and the detection of defective factory machine parts, and much more* (https://hbr.org/2020/02/small-data-can-play-a-big-role-in-ai). The reference at the predictive maintenance approach is clear.

Wilson and Daugherty emphasize the role of small data in transfer learning by three main components:
A. Balance machine learning with human domain expertise (the tacit knowledge paradigm)
B. Focus on the quality of human input not on the quality of machine output
C. Recognize the social dynamics in play on teams working with small data.

The initial model used for setting up the mechanism is proposing two main stages:
A. The predictive analytics module that refers to:
   a. Capturing data (the loT system and software)
   b. Processing the data
   c. Identify the anomalies and monitoring work
   d. The module is based on bigdata processing
B. The learning module using experts refers to:
   a. Processing the proposed scenarios (transfer learning)
   b. Validation and invalidation of the scenario
   c. Proposing new scenarios that should be reprocessed
   d. The module is based on small data processing. The training data are rooted in the bigdata approach, but they are small data. In the context the experts should validate or invalidate the scenarios and in the case of invalidation they are encouraged to provide a new approach.

The new architecture aims to improve the entire PdM framework by increasing the quality of predictions. Therefore, in the case of predictive maintenance, the competitive advantage as well as the accuracy of the outcomes will come not from excessive automation promoted by the bigdata approach, but from the human factor expertise and the rational relationship between humans and machine. People who are not data scientists could be transformed into AI trainers, like the technicians and engineers in the case of predictive maintenance. In this case, the results that emerge from small-data applications will come not from a black box, but from human-machine collaboration that renders those results explainable and therefore more trustworthy both inside and outside the organization as depicted in **FIGURE 9****.**

### EmissionX Platform - Capturing Data for Sustainability Reporting

Solving the problem of reporting the sustainability today decisively depends by the accuracy of related knowledge an organization can create. The complexity resides in the data distribution, and it is based on a business costumed way of thinking where the entire sense of truth is located around the financial assets. Quantifying carbon emissions is essential for understanding the carbon footprint of various activities and organizations, and for tracking progress in reducing greenhouse gas emissions. Here's an overview of common data sources and methods used to calculate carbon emissions that is used in the software solution:
Data Sources
- National Inventories. Most countries prepare and submit a national greenhouse gas inventory to the United Nations Framework Convention on Climate Change (UNFCCC) annually. These inventories detail emissions from various sectors like energy, transport, agriculture, etc.
- Emission Factors Databases. These are databases that provide emission factors for various activities and fuels. An emission factor represents the average emission rate of a given pollutant from a particular source relative to the intensity of a specific activity. Examples include the U.S. EPA's AP-42 Compilation of Air Pollutant Emission Factors and the Intergovernmental Panel on Climate Change (IPCC) guidelines.
- Organizational and Company Reports. Many organizations, especially large corporations, voluntarily report their greenhouse gas emissions. This is often done in annual sustainability reports or through initiatives like the Carbon Disclosure Project (CDP).
- Remote Sensing. Satellites can detect and measure emissions of methane and CO2. This technology is growing in use, especially for monitoring emissions from hard-to-reach areas or verifying national inventories.
- Direct Monitoring. This involves the use of sensors and other equipment to directly measure emissions from a source, such as a smokestack.
- Researchers' exploration of data.

The method proposed by patent was applied moving from different data spaces (including fuzzy) to small data using knowledge transfer approach to validate data recognized and collected by the robots from various sources and to allocate the resulted emissions per scopes (3 scopes and 23 subjacent subcategories as defined by Greenhouse Gas Protocol). The same method will be used in EmissionX to create a decision-making predictive approach for decarbonization scenarios, once the carbon footprint has been calculated based on the data collected at granular level, validated and allocated **(****FIGURE 9****).**

## Claims

1. A method for developing institutional knowledge to support institutional memory, decision-making, and predictive capabilities, the method comprising:
• Integrating quantitative and qualitative models using a unique algorithmic interaction between:
∘ three raw data spaces, including static data, dynamic data, and fuzzy data;
∘ an intuitive data repository (small data) to facilitate the context for tacit knowledge input;
∘ a knowledge theory based on Roger Martin's knowledge funnel;
• Leveraging modern software technologies, including machine learning (ML) and artificial intelligence (Al), at the intersection of data and knowledge science;
• Creating an extended model for an inference database that supports both qualitative and quantitative models to enhance decision-making, institutional memory, and predictive capabilities.

2. A method, according to claim 1, further comprising:
• Building a hybrid model that combines qualitative methods, including expert knowledge and scenario analysis, with quantitative methods, including statistical analysis and machine learning;
• Establishing feedback loops where quantitative models inform qualitative assessments and vice versa, enabling continuous refinement and improving the accuracy of the method's outcomes in memory, decision-making, and prediction.

3. A method, according to claim 1, wherein the integration process includes:
• First-level transformation from static, dynamic (big data), and fuzzy data to a small data (intuitive) framework, achieved through human input and feedback loops, involving the development of algorithms for knowledge transfer and the refinement of pre-trained models on domain-specific small datasets;
• Second level capturing and interpreting tacit knowledge through human input, incorporating this knowledge into institutional knowledge models using machine learning and natural language processing (NLP) techniques.

4. A method, according to claim 1, wherein the institutional knowledge usage framework includes:
• Defining requirements for accessing institutional memory, decision-making support, and prediction across various scopes;
• Conducting exploratory analysis of the institutional knowledge library;
• Creating the model using AI with predefined parameters, followed by supplementary validation by an expert;
• Deploying and continuously improving the model through automated feedback and correction mechanisms.
